# EUROPEAN PATENT APPLICATION

(11) **EP 1 849 722 A1**
(43) Date of publication of application: **31.10.2007**
(21) Application number: 05710427.5
(22) Date of filing: 18.02.2005
(51) Int. Cl.: B65G 15/42, B65G 15/32

(54) **CONVEYANCE BELT WITH GUIDE**

(71) Applicant: Nitta Corporation, Osaka-shi, Osaka 556-0022 (JP)
(72) Inventor: UCHIDA, Koji, c/o Nitta Corporation, Yamatokohriyama-shi, Nara 639-1085 (JP); YAMAMOTO, Takashi, c/o Nitta Corporation, Yamatokohriyama-shi, Nara 639-1085 (JP); KUBOTA, Takeshi, c/o Nitta Corporation, Yamatokohriyama-shi, Nara 639-1085 (JP)
(74) Representative: Alder, Hans Rudi
(86) International application number: PCT/JP2005/002595
(87) International publication number: WO 2006/087800

(57) **Abstract**

A conveyor belt with a guide includes: a flat belt; and a guide projecting from a surface of the flat belt on a side of a pulley along a longitudinal direction; the flat belt and the guide being integrally molded with an elastic material. Thus, the guide cannot be detached from the flat belt, thus achieving a high traveling stability and conveying performance for a long time. It is preferable that a core wire or cloth should be embedded in the flat belt, and further, that a vertical groove should be formed along a longitudinal direction at a bottom of the guide.

## Description

### TECHNICAL FIELD

The present invention relates to a conveyor belt with a guide for use in an apparatus for conveying paper or the like.

### BACKGROUND ART

In general, a flat belt having a flat conveying surface is used as a conveyor belt for use in a conveying apparatus for conveying paper or the like (for example, a printing sheet). Since the flat belt is brought into surface contact with an object to be conveyed, the object to be conveyed can be stably conveyed, with a problem of detachment of the belt from a pulley due to meanders during traveling. In view of this, there has been known a conveyor belt with a guide for preventing any meander at the flat belt.

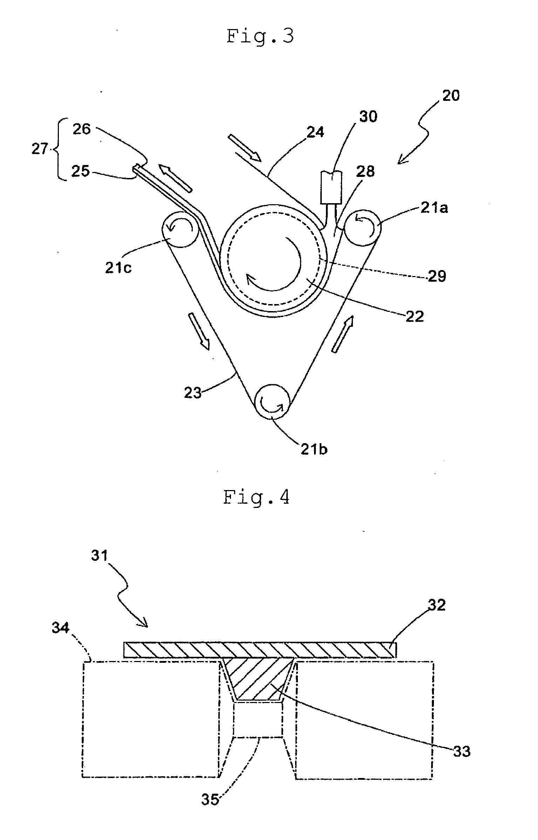

FIG. 4 is a cross-sectional view schematically showing a combination of a conveyor belt with a guide and a pulley in the conventional art. As shown in FIG. 4, the conveyor belt 31 with a guide is constituted of a flat belt 32, and a guide 33 projecting from a surface of the flat belt 32 on a side of a pulley 34 along a longitudinal direction. The conveyor belt 31 travels in the state in which the guide 33 is fitted into a guide groove 35 formed at the pulley 34, thereby preventing any meander of the conveyor belt 31.

However, the guide 33 is frequently joined to the flat belt 32 via an adhesive agent or by thermal fusion. Therefore, there is an adhesion deficiency, a thermal fusion deficiency, or the exertion of a deviated load such as a torsion on the belt, thereby raising a problem that the guide 33 is unfavorably detached from the flat belt 32. The guide 33 is detached from the flat belt 32, unfavorably resulting in the unstable traveling of the belt 31 so as to degrade conveying performance.

Patent literature 1 discloses a conveyor belt with a guide, in which a guide having a predetermined skin layer is bonded to a belt body via the skin layer. Patent literature 1 discloses that the guide cannot be readily detached from a belt body (a flat belt). However, in the case of insufficient adhesion or exertion of a deviated load such as a distortion on the belt, there is a fear that the guide may be accidentally detached from the flat belt. Patent literature 1: Japanese Unexamined Patent Publication No. 2003-12133

### DISCLOSURE OF THE INVENTION

### PROBLEMS TO BE SOLVED BY THE INVENTION

An object of the present invention is to provide a conveyor belt with a guide having a high traveling stability and conveying performance for a long time.

### MEANS FOR SOLVING THE PROBLEMS

Upon earnest studies for solving the above-described problems, the inventors of the present invention made new findings that in a conveyor belt with a guide constituted of a flat belt and a guide, the guide cannot be detached from the flat belt when the flat belt and the guide are integrally molded with an elastic material, thus achieving a high traveling stability and conveying performance for a long time. Finally, they reached the completion of the present invention.

Specifically, a conveyor belt with a guide according to the present invention is featured by the following points:
(1) A conveyor belt with a guide comprising:
   a flat belt; and
   a guide projecting from a surface of the flat belt on a side of a pulley along a longitudinal direction;
   the flat belt and the guide being integrally molded with an elastic material.
(2) A conveyor belt with a guide according to the above-described item (1), wherein a core wire or cloth is embedded in the flat belt.
(3) A conveyor belt with a guide according to the above-described item (1) or (2), wherein a vertical groove is formed along a longitudinal direction at a bottom of the guide.
(4) A conveyor belt with a guide according to any one of the above-described items (1) to (3), wherein both ends of the belt are joined to each other in an endless manner.
(5) A conveyor belt with a guide according to any one of the above-described items (1) to (4), wherein the belt is molded with one kind or two or more kinds selected from a group including polyurethane, polyvinyl chloride, a polyester-based elastomer, a polyamide-based elastomer and a polyolefin-based elastomer.

### EFFECTS OF THE INVENTION

In the conveyor belt with the guide of the present invention, the flat belt and the guide being integrally molded with an elastic material. Thus, the guide cannot be detached from the flat belt, thus achieving a high traveling stability and conveying performance for a long time.

### PREFEERED EMBODIMENS FOR CARRYING OUT THE INVENTION

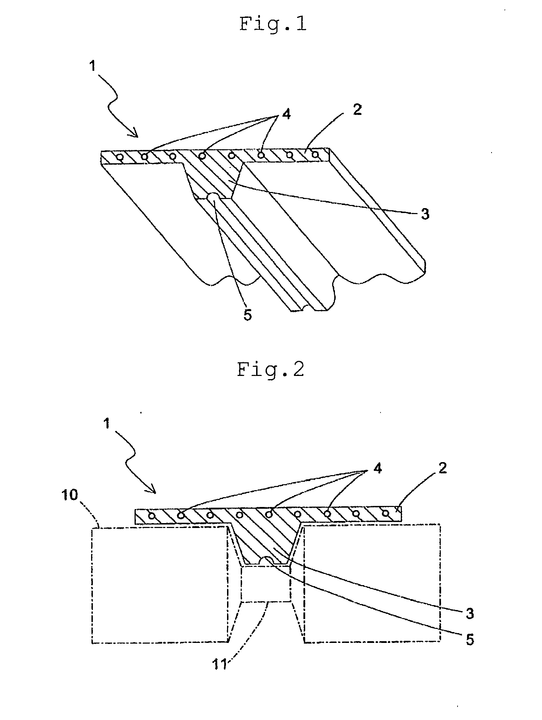

A conveyor belt with a guide according to the present invention will be explained in detail below with reference to the attached drawings. FIG. 1 is a cutaway and perspective view showing a conveyor belt with a guide in one embodiment according to the present invention; and FIG. 2 is a cross-sectional view schematically showing the combination of the conveyor belt and a pulley. As shown in FIGS. 1 and 2, the conveyor belt 1 with a guide is constituted of a flat belt 2, and a guide 3 projecting from a surface of the flat belt 2 on a side of a pulley 10 along a longitudinal direction. The flat belt 2 and the guide 3 are integrally molded with an elastic material. The guide 3 is fitted to a guide groove 11 formed at the pulley 10. Since the conveyor belt 1 travels in this state, the guide 3 cannot be detached from the flat belt 2, so that the conveyor belt 1 can achieve a high traveling stability and conveying performance for a long time.

Inside of the flat belt 2 are embedded a plurality of core wires 4 along a longitudinal direction of the conveyor belt 1. As a consequence, it is possible to enhance the longitudinal rigidity of the conveyor belt 1. As a material of the core wire 4 can be used various kinds of known materials which can be used as the core wire. Examples include a metallic wire, a polyester cord, a polyamide cord, a glass cord, and aramid or rayon which is formed into the shape of yarn or fiber. In addition, the number of core wires 4 is not particularly limited, but may be arbitrarily selected in accordance with a required conveying force.

The core wires 4 arranged in the longitudinal direction of the conveyor belt 1 may be uniformly embedded across the width of the belt 1 or may be densely embedded at either the center thereof or both side edges inside of the flat belt 2. Here, the shape of the core wire 4 is not particularly limited, but the core wire 4 may be sheet cloth or braded cloth made of the above-described aramid.

The shape of the guide 3 is not particularly limited as long as the guide 3 has a function of a guide for preventing any meander of the belt 1, and therefore, examples of a cross-sectional shape of the guide 3 include a trapezoid, a rectangle, a semi-circle, V, U and the like. Furthermore, a vertical groove 5 is formed along the longitudinal direction of the belt 1 at the bottom of the guide 3. The vertical groove 5 can apply flexibility to the guide 3, and further, can reduce the material constituting the guide 3, thereby achieving cost reduction. The vertical groove 5 should be preferably formed into a shape such as a semi-circle, V or a rectangle.

As shown in FIGS. 1 and 2, the single guide 3 projects from substantially a center surface of the flat belt 2 on a side of the pulley 10 along the longitudinal direction. Otherwise, the guide 3 may arbitrarily project from any position in the arbitrary number selected in accordance with the width of the flat belt or the pulley to be combined, and therefore, the position and the number are not particularly limited to those shown in FIGS. 1 and 2. For example, in the case where the flat belt is wide, a plurality of guides may project from the flat belt. In this case, at least one guide should preferably project from each of both ends of the flat belt. Alternatively, a plurality of guides may be disposed adjacently to each other at substantially a center of the flat belt.

Various kinds of known elastic materials, which are usable as a conveyor belt, can be used in forming the flat belt 2 and the guide 3. For example, one kind or two or more kinds of elastic material can be selected among rubber, a synthetic resin and a thermoplastic elastomer. Examples of the rubber include natural rubber, isoprene rubber, butadiene rubber, styrene-butadiene rubber, ethylene propylene rubber, chloroprene rubber, chlorinated polyethylene rubber, epichlorohydrin rubber, nitrile rubber, acrylic rubber, polyurethane rubber, and an H-NBR (a hydrogenated nitrile-butadiene rubber). Examples of the synthetic resin include polyurethane, polyvinyl chloride, polycarbonate, polyester, polyalylate, a styrene-butadiene copolymer, a styrene-acrylonitrile copolymer, an acrylic copolymer, a styrene-acrylic acid copolymer, polyethylene, an ethylene-vinyl acetate copolymer, chlorinated polyethylene, polypropylene, a polyvinyl chloride-polyvinyl acetate copolymer, an alkyd resin, a polyamide resin, a polysulfone resin, a diallylphthalate resin, a ketone resin, a polyvinyl acetal resin, and a polyether resin. Examples of the thermoplastic elastomer include a polyester-based elastomer, a polyamide-based elastomer, and a polyolefin-based elastomer.

According to the present invention, it is preferable that the conveyor belt 1 should be particularly molded with one kind or two or more kinds selected from a group including polyurethane, polyvinyl chloride, a polyester-based elastomer, a polyamide-based elastomer, and a polyolefin-based elastomer.

It is desirable that the conveyor belt 1 with the guide should be formed into an endless shape by joining both ends thereof to each other. Thus, the conveyor belt 1 can be stretched between the pulleys, to convey an object to be conveyed. The joint of both ends is not particularly limited, but it may be performed, for example, by thermal fusion or via an adhesive agent.

Subsequently, detailed explanation will be made below on one example of a method for fabricating the conveyor belt with the guide according to the present invention with reference to the drawings. FIG. 3 is a schematic view explanatory of a method for fabricating the conveyor belt with the guide in one example according to the present invention. As shown in FIG. 3, an apparatus 20 for fabricating the conveyor belt with the guide is constituted of pulleys 21a, 21b and 21c, a guide molding pulley 22 interposed between the pulleys 21a and 21c, and a belt 23 stretched by the use of the pulleys 21a, 21b, 21c and 22.

Here, the belt 23 is brought into press-contact with the pulley 22 during non-operation of the apparatus by the effect of the pulley 21b: in contrast, during operation of the apparatus when a molten elastic material is poured between the pulley 22 and the belt 23, the elastic material is held between the pulley 22 and the belt 23, thereby keeping a predetermined clearance (a clearance equivalent to the thickness of the flat belt). Furthermore, a groove 29 having a shape in conformity with the guide in the conveyor belt with the guide is formed at substantially the center of the guide molding pulley 22 along the circumferential direction of the pulley 22.

Thereafter, a molten elastic material 28 is continuously poured from an injection nozzle 30 while sequentially inserting a core wire 24 between the pulley 21a and the guide molding pulley 22. In this state, the elastic material 28 is coldly solidified during about half rotation of the pulley 22 by rotating the belt 23 and the pulley 22 in directions indicated by arrows. And then, a conveyor belt 27 with a guide including a flat belt 25 having the core wire 24 embedded therein and a guide 26 is fabricated from between the pulley 21c and the pulley 22.

The conveyor belt with the guide according to the present invention is not limited to the above-described fabricating method. Alternatively, a conveyor belt with a guide may be injection-molded or extruded into a predetermined shape, and thus, it may be fabricated by integrally molding the flat belt and the guide.

The conveyor belt with the guide according to the present invention is used as a conveying apparatus in a printer or a copying machine, for conveying paper or the like (e.g., a printing sheet) while vertically holding it between two belts. Thus, such an object to be conveyed can be securely conveyed. Incidentally, the conveying apparatus using the conveyor belt with the guide according to the present invention is not limited to the above-described conveying apparatus, but it may be used as a conveying apparatus for conveying paper or the like (e.g., paper money) in a financial institution, a conveying apparatus for conveying a thin steel plate or a corrugated cardboard, or a conveying apparatus for use in precision equipment, food equipment, play equipment or a machine tool. Furthermore, the conveyor belt with the guide according to the present invention may be used as a driving belt.

### BRIEF EXPLANATION OF THE DRAWINGS

FIG. 1 is a cutaway and perspective view showing a conveyor belt with a guide in one embodiment according to the present invention;
FIG. 2 is a cross-sectional view schematically showing the combination of the conveyor belt with a guide and a pulley according to the present invention;
FIG. 3 is a schematic view explanatory of a method for fabricating the conveyor belt with a guide in one embodiment according to the present invention; and
FIG. 4 is a cross-sectional view schematically showing the combination of a conveyor belt with a guide and a pulley in the conventional art.

### DESCRIPTION OF REFERENCE NUMERALS

Reference numeral 1 denotes a conveyor belt with a guide;
Reference numeral 2 denotes a flat belt;
Reference numeral 3 denotes a guide;
Reference numeral 4 denotes a core wire;
Reference numeral 5 denotes a vertical groove; and
Reference numeral 10 denotes a pulley.

## Claims

1. A conveyor belt with a guide comprising:
a flat belt; and
a guide projecting from a surface of the flat belt on a side of a pulley along a longitudinal direction;
the flat belt and the guide being integrally molded with an elastic material.

2. A conveyor belt with a guide according to claim 1, wherein a core wire or cloth is embedded in the flat belt.

3. A conveyor belt with a guide according to claim 1 or claim 2, wherein a vertical groove is formed along a longitudinal direction at a bottom of the guide.

4. A conveyor belt with a guide according to any one of claims 1 to 3, wherein both ends of the belt are joined to each other in an endless manner.

5. A conveyor belt with a guide according to any one of claims 1 to 4, wherein the belt is molded with one kind or two or more kinds selected from a group including polyurethane, polyvinyl chloride, a polyester-based elastomer, a polyamide-based elastomer and a polyolefin-based elastomer.

## Amended claims

### Amended claims under Art. 19.1 PCT

**1.** (amended) A conveyor belt with a guide comprising:
a flat belt; and
a guide projecting from a surface of the flat belt on a side of a pulley along a longitudinal direction;
the flat belt and the guide being integrally molded with an elastic material, and a core wire or cloth is embedded in the flat belt.

**2.** (amended) A conveyor belt with a guide comprising:
a flat belt; and
a guide projecting from a surface of the flat belt on a side of a pulley along a longitudinal direction;
a molten elastic material being sequentially poured between a pulley having a guide molding groove formed at a circumferential surface and a belt disposed on a side of an outer periphery of the pulley, and further, the pulley and the belt being rotated in the same direction, thus integrally and sequentially molding the flat belt and the guide with the elastic material.

**3.** (amended) A conveyor belt with a guide comprising:
a flat belt; and
a guide projecting from a surface of the flat belt on a side of a pulley along a longitudinal direction;
a molten elastic material being sequentially poured between a pulley having a guide molding groove formed at a circumferential surface and a belt disposed on a side of an outer periphery of the pulley while sequentially inserting a core wire or cloth, and further, the pulley and the belt being rotated in the same direction, thus integrally and sequentially molding the flat belt having the core wire or cloth embedded therein and the guide with the elastic material.

**4.** (amended) A conveyor belt with a guide according to claims 1 to 3, wherein a vertical groove is formed along a longitudinal direction at a bottom of the guide.

**5.** (amended) A conveyor belt with a guide according to any one of claims 1 to 3, wherein both ends of the belt are joined to each other in an endless manner.

**6.** (added) A conveyor belt with a guide according to any one of claims 1 to 3, wherein the belt is molded with one kind or two or more kinds selected from a group including polyurethane, polyvinyl chloride, a polyester-based elastomer, a polyamide-based elastomer and a polyolefin-based elastomer.
